# EUROPEAN PATENT APPLICATION

(11) **EP 3 832 492 A1**
(43) Date of publication of application: **09.06.2021**
(21) Application number: 20819603.0
(22) Date of filing: 07.04.2020
(51) Int. Cl.: G06F 16/632

(54) **METHOD AND APPARATUS FOR RECOMMENDING VOICE PACKET, ELECTRONIC DEVICE, AND STORAGE MEDIUM**

(30) Priority: 12.10.2019 CN 201910968514
(71) Applicant: Baidu Online Network Technology (Beijing) Co., Ltd, Beijing 100085 (CN)
(72) Inventor: JI, Ran, Beijing 100085 (CN); HUANG, Jizhou, Beijing 100085 (CN); LI, Ying, Beijing 100085 (CN); JI, Yongzhi, Beijing 100085 (CN); JIA, Lei, Beijing 100085 (CN)
(74) Representative: Maiwald Patent- und Rechtsanwaltsgesellschaft mbH
(86) International application number: PCT/CN2020/083545
(87) International publication number: WO 2021/068467

(57) **Abstract**

The present disclosure discloses a method and an apparatus for recommending a speech packet, an electronic device, and a storage medium, and relates a field of intelligent search technologies. The detailed implementing solution includes: obtaining a search request of a user; recognizing the search request to obtain a timbre interest identifier of the user; and retrieving a target speech packet based on the timbre interest identifier, and recommending the target speech packet to the user. With the method, the timbre interest identifier of the user is obtained by recognizing the search request of the user, and a speech packet having an interested timbre to the user is recommended to the user based on the timbre interest identifier of the user, thereby implementing personalized recommendation of the speech packet. The user does not need to try listening to the speech packets one by one for selecting, the operation is simple, the recommendation is accurate, and intelligence is improved.

## Description

### CROSS-REFERENCE TO RELATED APPLICATION(S)

This application claims a priority to Chinese Patent Application No. 201910968514.9, filed with China National Intellectual Property Administration on October 12, 2019 by Baidu Online Network Technology (Beijing) CO., LTD., entitled "method and apparatus for recommending a speech packet, electronic device, and storage medium", the entire contents of which are incorporated herein by reference.

### FIELD

The present disclosure relates to a field of data processing technologies and particularly to a field of intelligent search technologies, and relates to a method and an apparatus for recommending a speech packet, an electronic device, and a storage medium.

### BACKGROUND

Presently, an electronic map may provide multiple speech packets. A user may select a required speech packet for use from the multiple speech packets. Generally, the user selects the required speech packet by trying listening to the multiple speech packets one by one, which is cumbersome and inefficient.

### SUMMARY

The present disclosure provides a method and an apparatus for recommending a speech packet, an electronic device, and a storage medium, thereby solving problems of complicated operation and low efficiency caused by trying listening to speech packets one by one to select a speech packet in the related art.

A first aspect of embodiments of the present disclosure provides a method for recommending a speech packet. The method includes: obtaining a search request of a user; recognizing the search request to obtain a timbre interest identifier of the user; and retrieving a target speech packet based on the timbre interest identifier, and recommending the target speech packet to the user.

With the method for recommending the speech packet according to embodiments of the present disclosure, the search request of the user is obtained. The search request is recognized to obtain the timbre interest identifier of the user. The target speech packet is retrieved based on the timbre interest identifier. The target speech packet is recommended to the user. In this way, the timbre interest identifier of the user is obtained by recognizing the search request of the user, and a speech packet having an interested timbre to the user is recommended to the user based on the timbre interest identifier of the user, thereby implementing a personalized recommendation of the speech packet. The user does not need to try listening to the speech packets one by one for selecting, the operation is simple, the recommendation is accurate, and intelligence is improved.

Another aspect of embodiments of the present disclosure provides an apparatus for recommending a speech packet. The apparatus includes: an obtaining module, a recognizing module, and a recommending module. The obtaining module is configured to obtain a search request of a user. The recognizing module is configured to recognize the search request to obtain a timbre interest identifier of the user. The recommending module is configured to retrieve a target speech packet based on the timbre interest identifier, and to recommend the target speech packet to the user.

With the apparatus for recommending the speech packet according to embodiments of the present disclosure, the search request of the user is obtained. The search request is recognized to obtain the timbre interest identifier of the user. The target speech packet is retrieved based on the timbre interest identifier. The target speech packet is recommended to the user. In this way, the timbre interest identifier of the user is obtained by recognizing the search request of the user, and a speech packet having an interested timbre to the user is recommended to the user based on the timbre interest identifier of the user, thereby implementing a personalized recommendation of the speech packet. The user does not need to try listening to the speech packets one by one for selecting, the operation is simple, the recommendation is accurate, and intelligence is improved.

Another aspect of embodiments of the present disclosure provides an electronic device. The electronic device includes: at least one processor and a memory. The memory is communicatively coupled to the at least one processor. The memory is configured to store instructions executed by the at least one processor. When the instructions are executed by the at least one processor, the at least one processor is caused to execute the method for recommending the speech packet according to the first aspect of embodiments.

Another aspect of embodiments of the present disclosure provides a non-transitory computer readable storage medium. The non-transitory computer readable storage medium has computer instructions stored thereon. The computer instructions are configured to enable a computer to execute the method for recommending the speech packet according to the first aspect of embodiments.

Embodiments of the present disclosure have following advantageous effects. The user does not need to try listening to the speech packets one by one for selecting, the operation is simple, the recommendation is accurate, and intelligence is improved. With the method, the timbre interest identifier of the user is obtained by recognizing the search request of the user, and a speech packet having an interested timbre to the user is recommended to the user based on the timbre interest identifier of the user, thereby overcoming the problems of the complicated operation and the low efficiency because the user tries listening to the speech packets one by one for selecting the required speech packet, and implementing the personalized recommendation of the speech packet. The user does not need to try listening to the speech packets one by one for selecting, the operation is simple, the recommendation is accurate, and intelligence is improved.

Other effects of the above alternative modes will be described below in combination with detailed embodiments.

### BRIEF DESCRIPTION OF THE DRAWINGS

The accompanying drawings are used for better understanding the solution and do not constitute a limitation of the present disclosure.
FIG. 1 is a flow chart illustrating a method for recommending a speech packet according to an embodiment of the present disclosure.
FIG. 2 is a flow chart illustrating a method for recommending a speech packet according to another embodiment of the present disclosure.
FIG. 3 is a flow chart illustrating a method for recommending a speech packet according to another embodiment of the present disclosure.
FIG. 4 is a flow chart illustrating a method for recommending a speech packet according to another embodiment of the present disclosure.
FIG. 5 is a block diagram illustrating an apparatus for recommending a speech packet according to an embodiment of the present disclosure.
FIG. 6 is a block diagram illustrating an electronic device capable of implementing a method for recommending a speech packet according to embodiments of the present disclosure.

### DETAILED DESCRIPTION

Description will be made below to exemplary embodiments of the present disclosure with reference to accompanying drawings, which includes various details of embodiments of the present disclosure to facilitate understanding and should be regarded as merely examples. Therefore, it should be recognized by the skilled in the art that various changes and modifications may be made to the embodiments described herein without departing from the scope and spirit of the present disclosure. Meanwhile, for clarity and conciseness, descriptions for well-known functions and structures are omitted in the following description.

Description will be made below to a method and an apparatus for recommending a speech packet, an electronic device, and a storage medium according to embodiments of the present disclosure with reference to accompanying drawings.

In embodiments of the present disclosure, for technical problems of complicated operation and low efficiency caused by trying listening speech packages one by one for selecting in the related art, a method for recommending a speech packet is provided.

With the method for recommending the speech packet according to embodiments of the present disclosure, a search request of a user is recognized to obtain a timbre interest identifier of the user, and a speech packet having an interested timbre to the user is recommended to the user based on the timbre interest identifier of the user, thereby implementing a personalized recommendation of the speech packet.

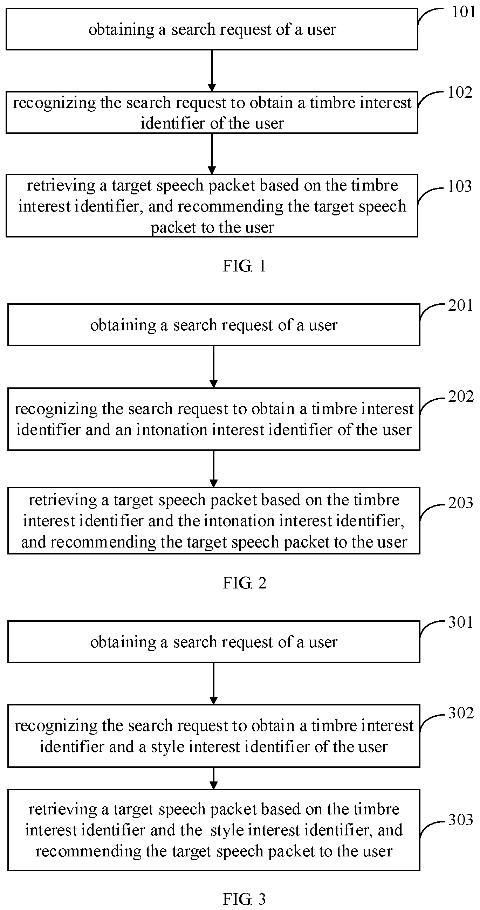

FIG. 1 is a flow chart illustrating a method for recommending a speech packet according to an embodiment of the present disclosure.

The method for recommending the speech packet according to embodiments of the present disclosure may be executed by an apparatus for recommending a speech packet according to embodiments of the present disclosure. The apparatus is configured in an electronic device, such as a mobile phone, a tablet and other device having an operating system, thereby implementing to recommend a speech packet corresponding to a timbre interest identifier of the user to the user based on the search request of the user.

As illustrated in FIG. 1, the method for recommending the speech packet includes the following.

At block 101, a search request of a user is obtained.

In this embodiment, when the user opens an interface for providing the speech packet, the interface may include a list of speech packets, a search box, a speech input button, and the like. The user may input a text in the search box, such as "I want a soft speech packet", or may also perform speech search. Therefore, the electronic device may obtain the search request of the user.

As an application scenario, an electronic map provides an interface for the list of speech packets. The interface includes a search box or a speech input button. The user may search for the speech packet by utilizing the search box or the speech input button.

The search request includes, but is not limited to, a sentence or a speech input by the user.

At block 102, the search request is recognized to obtain a timbre interest identifier of the user.

In a practical application, when the user searches for the speech packet, the search request generally includes a requirement or a condition of the user for the speech packet, such as a requirement for a timbre. In this embodiment, the timbre interest identifier of the user may be obtained by recognizing the search request. The timbre interest identifier is used to represent a timbre that the user is interested in.

For example, when the search request of the user is "I want a speech package with sweet voice", the term "sweet" is the timbre interest identifier of the user.

As a possible implementation, a large amount of timbre identifiers may be preset. It is determined whether there is a preset timbre identifier in the search request after the search request of the user is obtained. If there is the preset timbre identifier, the preset timbre identifier is the timbre interest identifier of the user.

As another possible implementation, an existing word segmentation method is employed to segment the search request to generate multiple segmentation words. Then attribute information of each segmentation word is obtained. The attribute information includes, such as a verb, a noun, and an adjective. A qualifier corresponding to a preset noun is obtained based on the attribute information of the multiple segmentation words. The timbre interest identifier of the user is obtained based on the qualifier. In detail, the qualifier is matched with the preset timbre identifier to determine whether the qualifier is the timbre interest identifier.

The preset noun may be, such as a "speech package", a "sound", and a "speech". For example, the search request is "I want a speech packet with sweet voice". The search request is segmented, and the attribute information of the segmentation word is determined, to obtain that the term "sweet" is an adjective, which is the qualifier of the preset noun "speech package". The term "sweet" is determined as the timbre identifier by comparing the term "sweet" with the preset timbre identifier, and then the term "sweet" may be used as the timbre interest identifier of the user.

At block 103, a target speech packet is retrieved based on the timbre interest identifier, and the target speech packet is recommended to the user.

In this embodiment, a timbre identifier of each speech packet is marked in advance. The timbre interest identifier of the user is compared with the timbre identifier of each speech packet after the timbre interest identifier of the user is obtained, to determine a speech packet corresponding to a timbre identifier consistent with the timbre interest identifier of the user. The speech packet is taken as the target speech packet, and recommended to the user.

Further, the electronic device may generate a corresponding broadcast sound based on the target speech packet, such as, a broadcast sound related to a navigation, a bus, a riding, an introduction for a scenic spot, and the like.

In this embodiment, the target speech packet corresponding to the timbre interest identifier of the user is selected from the multiple speech packets based on the timbre interest identifier of the user, and then recommended to the user, thereby implementing an accurate recommendation.

With the method for recommending the speech packet according to embodiments of the present disclosure, the search request of the user is obtained. The search request is recognized to obtain the timbre interest identifier of the user. The target speech packet is retrieved based on the timbre interest identifier. The target speech packet is recommended to the user. In this way, the timbre interest identifier of the user is obtained by recognizing the search request of the user, and a speech packet having an interested timbre to the user is recommended to the user based on the timbre interest identifier of the user, thereby implementing a personalized recommendation of the speech packet. The user does not need to try listening to the speech packets one by one to select, the operation is simple, the recommendation is accurate, and intelligence is improved.

In a practical application, the user may not only have a requirement for the timbre of the speech package, but also have a requirement for an intonation of the speech package. In embodiments of the present disclosure, the search request may also be recognized to obtain an intonation interest identifier of the user, and the target speech package is retrieved based on the timbre interest identifier and the intonation interest identifier of the user. Description will be made below in combination with FIG. 2. FIG. 2 is a flow chart illustrating a method for recommending a speech packet according to another embodiment of the present disclosure.

As illustrated in FIG. 2, the method for recommending the speech packet includes the following.

At block 201, a search request of a user is obtained.

In this embodiment, the action at block 201 is similar to the action at block 101, which is not elaborated herein.

At block 202, the search request is recognized to obtain a timbre interest identifier and an intonation interest identifier of the user.

In a practical application, when the user searches for a speech packet, the search request generally includes a requirement or a condition of the user for the speech packet, such as a requirement for a timbre and an intonation. In this embodiment, the timbre interest identifier and the intonation interest identifier of the user may be obtained by recognizing the search request.

The timbre interest identifier is used to represent a timbre that the user is interested in. The intonation interest identifier is used to represent an intonation that the user is interested in.

For example, when the search request of the user is "I want a sweet and slow speech package", the term "sweet" is the timbre interest identifier of the user, and the term "slow" is the intonation interest identifier of the user.

As a possible implementation, a large amount of timbre identifiers and a large amount of intonation identifiers may be preset. It is determined whether there is a preset timbre identifier in the search request after the search request of the user is obtained. If there is the preset timbre identifier, the preset timbre identifier is the timbre interest identifier of the user. It is determined whether there is a preset intonation identifier in the search request. If there is the preset intonation identifier, the preset intonation identifier is the intonation interest identifier of the user.

As another possible implementation, an existing word segmentation method is employed to segment the search request to generate multiple segmentation words. Then attribute information of each segmentation word is obtained. The attribute information includes, such as a verb, a noun, and an adjective. A qualifier corresponding to a preset noun is obtained based on the attribute information of the multiple segmentation words. The timbre interest identifier of the user is obtained based on the qualifier. In detail, the qualifier is matched with the preset timbre identifier and the preset intonation identifier to determine whether the qualifier is the timbre interest identifier or the intonation interest identifier.

The preset noun may be, such as a "speech package", a "sound (or, voice)", and a "speech".

For example, the search request is "I want a speech packet with sweet and slow voice". The search request is segmented, and the attribute information of the segmentation word is determined, to obtain that the term "sweet" and the term "slow" are adjectives, which are the qualifiers of the preset noun "speech package". The term "sweet" is determined as the timbre identifier and the term "slow" is the intonation identifier by comparing the term "sweet" with the preset timbre identifier and comparing the term "slow" to the preset intonation identifier. The term "sweet" may be used as the timbre interest identifier of the user, and the term "slow" may be used as the intonation interest identifier of the user.

At block 203, the target speech package is retrieved based on the timbre interest identifier and the intonation interest identifier, and recommended to the user.

In this embodiment, a timbre identifier and an intonation identifier of each speech packet are marked in advance. After the timbre interest identifier and the intonation interest identifier of the user is obtained, the timbre interest identifier of the user is compared with the timbre identifier of each speech packet, and the intonation interest identifier of the user is compared with the intonation identifier of each speech packet, to determine a speech packet corresponding to a timbre identifier consistent with the timbre interest identifier of the user and an intonation identifier consistent with the intonation interest identifier of the user. The speech packet is taken as the target speech packet, and recommended to the user.

In this embodiment, the target speech packet corresponding to the timbre interest identifier and the intonation interest identifier of the user is selected from the multiple speech packets based on the timbre interest identifier and the intonation interest identifier of the user, and then recommended to the user, thereby implementing an accurate recommendation.

With the method for recommending the speech packet according to embodiments of the present disclosure, the search request of the user is obtained. The search request is recognized to obtain the timbre interest identifier and the intonation interest identifier of the user. The target speech packet is retrieved based on the timbre interest identifier and the intonation interest identifier. The target speech packet is recommended to the user. In this way, the timbre interest identifier and the intonation interest identifier of the user are obtained by recognizing the search request of the user, and a speech packet having an interested timbre and an interested intonation to the user is recommended to the user based on the timbre interest identifier and the intonation interest identifier of the user, thereby implementing a personalized recommendation of the speech packet. The user does not need to try listening to the speech packets one by one to select, the operation is simple, the recommendation is accurate, and intelligence is improved.

In a practical application, the user may not only have a requirement for the timbre of the speech package, but also have a requirement for a style of the speech package. In embodiments of the present disclosure, the search request is recognized to obtain a style interest identifier of the user, and the target speech package is retrieved based on the timbre interest identifier and the style interest identifier of the user. Description will be made below in combination with FIG. 3. FIG. 3 is a flow chart illustrating a method for recommending a speech packet according to another embodiment of the present disclosure.

As illustrated in FIG. 3, the method for recommending the speech packet includes the following.

At block 301, a search request of a user is obtained.

In this embodiment, the action at block 301 is similar to the action at block 101, which is not elaborated herein.

At block 302, the search request is recognized to obtain a timbre interest identifier and a style interest identifier of the user.

In a practical application, when the user searches for a speech packet, the search request generally includes a requirement or a condition of the user for the speech packet, such as a requirement for a timbre and a style. In this embodiment, the timbre interest identifier and the style interest identifier of the user may be obtained by recognizing the search request.

The timbre interest identifier is used to represent a timbre that the user is interested in. The style interest identifier is used to represent a style that the user is interested in.

For example, when the search request of the user is "I want a sweet and humorous speech package", the term "sweet" is the timbre interest identifier of the user, and the term "humorous" is the style interest identifier of the user.

As a possible implementation, a large amount of timbre identifiers and a large amount of style identifiers may be preset. It is determined whether there is a preset timbre identifier in the search request after the search request of the user is obtained. If there is the preset timbre identifier, the preset timbre identifier is the timbre interest identifier of the user. It is determined whether there is a preset style identifier in the search request. If there is the preset style identifier, the preset style identifier is the style interest identifier of the user.

As another possible implementation, an existing word segmentation method is employed to segment the search request to generate multiple segmentation words. Then attribute information of each segmentation word is obtained. The attribute information includes, such as a verb, a noun, and an adjective. A qualifier corresponding to a preset noun is obtained based on the attribute information of the multiple segmentation words. The timbre interest identifier of the user is obtained based on the qualifier. In detail, the qualifier is matched with the preset timbre identifier and the preset style identifier to determine whether the qualifier is the timbre interest identifier or the style interest identifier.

The preset noun may be, such as a "speech package", a "sound", and a "speech".

For example, the search request is "I want a sweet and humorous speech packet". The search request is segmented, and the attribute information of the segmentation word is determined, to obtain that the term "sweet" and the term "humorous" are adjectives, which are the qualifiers of the preset noun "speech package". The term "sweet" is determined as the timbre identifier and the term "humorous" is the style identifier by comparing the term "sweet" with the preset timbre identifier and comparing the term "humorous" to the preset style identifier. The term "sweet" may be used as the timbre interest identifier of the user, and the term "humorous" may be used as the style interest identifier of the user.

At block 303, the target speech package is retrieved based on the timbre interest identifier and the style interest identifier, and recommended to the user.

In this embodiment, a timbre identifier and a style identifier of each speech packet are marked in advance. After the timbre interest identifier and the style interest identifier of the user is obtained, the timbre interest identifier of the user is compared with the timbre identifier of each speech packet, and the style interest identifier of the user is compared with the style identifier of each speech packet, to determine a speech packet corresponding to a timbre identifier consistent with the timbre interest identifier of the user and a style identifier consistent with the style interest identifier of the user. The speech packet is taken as the target speech packet, and recommended to the user.

In this embodiment, the target speech packet corresponding to the timbre interest identifier and the style interest identifier of the user is selected from the multiple speech packets based on the timbre interest identifier and the style interest identifier of the user, and then recommended to the user, thereby implementing an accurate recommendation.

With the method for recommending the speech packet according to embodiments of the present disclosure, the search request of the user is obtained. The search request is recognized to obtain the timbre interest identifier and the style interest identifier of the user. The target speech packet is retrieved based on the timbre interest identifier and the style interest identifier. The target speech packet is recommended to the user. In this way, the timbre interest identifier and the style interest identifier of the user are obtained by recognizing the search request of the user, and a speech packet having an interested timbre and an interested style to the user is recommended to the user based on the timbre interest identifier and the style interest identifier of the user, thereby implementing a personalized recommendation of the speech packet. The user does not need to try listening to the speech packets one by one to select, the operation is simple, the recommendation is accurate, and intelligence is improved.

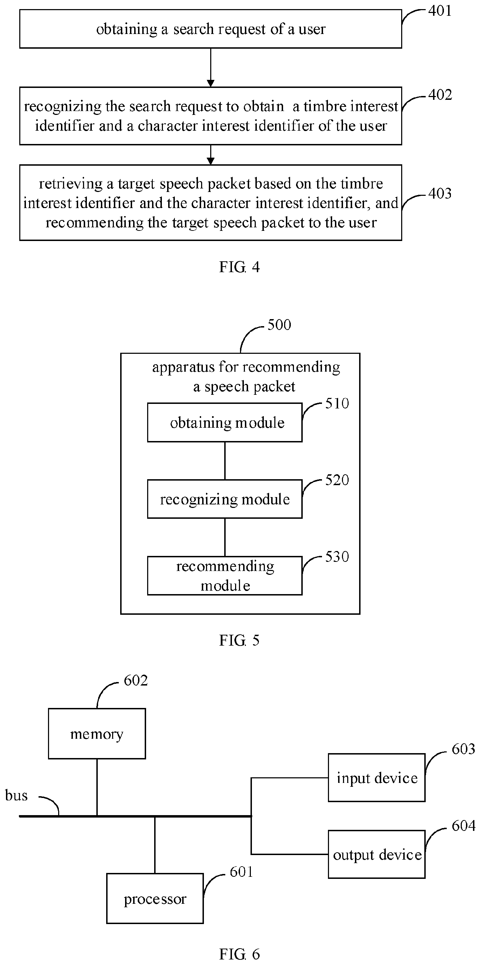

In a practical application, the user may not only have a requirement for the timbre of the speech package, but also requires that a sound of the speech package with a voice which is similar to a character's voice. In embodiments of the present disclosure, the search request is recognized to obtain a character interest identifier of the user, and the target speech package is retrieved based on the timbre interest identifier and the character interest identifier of the user. Description will be made below in combination with FIG. 4. FIG. 4 is a flow chart illustrating a method for recommending a speech packet according to another embodiment of the present disclosure.

As illustrated in FIG. 4, the method for recommending the speech packet includes the following.

At block 401, a search request of a user is obtained.

In this embodiment, the action at block 401 is similar to the action at block 101, which is not elaborated herein.

At block 402, the search request is recognized to obtain a timbre interest identifier and a character interest identifier of the user.

In a practical application, when the user searches for a speech packet, the search request generally includes a requirement or a condition of the user for the speech packet, such as a requirement for a timbre or a sound similar to a person. In this embodiment, the timbre interest identifier and the character interest identifier of the user may be obtained by recognizing the search request.

The timbre interest identifier is used to represent a timbre that the user is interested in. The character interest identifier is used to represent a character that the user is interested in.

For example, when the search request of the user is "I want a speech package with a sweet voice similar to a ** character" (** represents a name of the character here), the term "sweet" is the timbre interest identifier of the user, and the term "**" is the character interest identifier of the user.

As a possible implementation, a large amount of timbre identifiers and a large amount of character identifiers may be preset. It is determined whether there is a preset timbre identifier in the search request after the search request of the user is obtained. If there is the preset timbre identifier, the preset timbre identifier is the timbre interest identifier of the user. It is determined whether there is a preset character identifier in the search request. If there is the preset character identifier, the preset character identifier is the character interest identifier of the user.

As another possible implementation, an existing word segmentation method is employed to segment the search request to generate multiple segmentation words. Then attribute information of each segmentation word is obtained. The attribute information includes, such as a verb, a noun, and an adjective. A qualifier corresponding to a preset noun is obtained based on the attribute information of the multiple segmentation words. The timbre interest identifier of the user is obtained based on the qualifier. In detail, the qualifier is matched with the preset timbre identifier to determine whether the qualifier is the timbre interest identifier. It is determined whether the qualifier is a name of the character and whether the qualifier is the character interest identifier.

The preset noun may be, such as a "speech package", a "sound", and a "speech".

For example, the search request is "I want a speech package with a sweet voice which is similar to a ** character". The search request is segmented, and the attribute information of the segmentation word is determined, to obtain that the term "sweet" and the term "**" are adjectives, which are the qualifiers of the preset noun "speech package". The term "sweet" is determined as the timbre identifier and the term "**" is the character identifier by comparing the term "sweet" with the preset timbre identifier and comparing the term "**" to the preset character identifier. The term "sweet" may be used as the timbre interest identifier of the user, and the term "**" may be used as the character interest identifier of the user.

At block 403, the target speech package is retrieved based on the timbre interest identifier and the character interest identifier, and recommended to the user.

In this embodiment, a timbre identifier and a character identifier of each speech packet are marked in advance. After the timbre interest identifier and the style interest identifier of the user is obtained, the timbre interest identifier of the user is compared with the timbre identifier of each speech packet, and the character interest identifier of the user is compared with the character identifier of each speech packet, to determine a speech packet corresponding to a timbre identifier consistent with the timbre interest identifier of the user and a character identifier consistent with the character interest identifier of the user. The speech packet is taken as the target speech packet, and recommended to the user.

In this embodiment, the target speech packet corresponding to the timbre interest identifier and the character interest identifier of the user is selected from the multiple speech packets based on the timbre interest identifier and the character interest identifier of the user, and then recommended to the user, thereby implementing an accurate recommendation.

With the method for recommending the speech packet according to embodiments of the present disclosure, the search request of the user is obtained. The search request is recognized to obtain the timbre interest identifier and the character interest identifier of the user. The target speech packet is retrieved based on the timbre interest identifier and the character interest identifier. The target speech packet is recommended to the user. In this way, the timbre interest identifier and the character interest identifier of the user are obtained by recognizing the search request of the user, and a speech packet having an interested timbre and an interested character to the user is recommended to the user based on the timbre interest identifier and the character interest identifier of the user, thereby implementing a personalized recommendation of the speech packet. The user does not need to try listening to the speech packets one by one to select, the operation is simple, the recommendation is accurate, and intelligence is improved.

It should be noted that, one or more interest identifiers such as the timbre interest identifier, the intonation interest identifier, the style interest identifier and the character interest identifier may be obtained by recognizing the search request. For example, when the timbre interest identifier, the intonation interest identifier and the style interest identifier of the user are obtained by recognizing the search request, a corresponding target speech package may be obtained based on the timbre interest identifier, the intonation interest identifier and the style interest identifier, and then recommended to the user.

To achieve the above embodiments, embodiments of the present disclosure also provide an apparatus for recommending a speech packet. FIG. 5 is a block diagram illustrating an apparatus for recommending a speech packet according to an embodiment of the present disclosure.

As illustrated in FIG. 5, the apparatus 500 for recommending a speech packet includes an obtaining module 510, a recognizing module 520, and a recommending module 530.

The obtaining module 510 is configured to obtain a search request of a user.

The recognizing module 520 is configured to recognize the search request to obtain a timbre interest identifier of the user.

The recommending module 530 is configured to retrieve a target speech packet based on the timbre interest identifier, and to recommend the target speech packet to the user.

In a possible implementation of embodiments of the present disclosure, the recognizing module 520 may also be configured to: recognize the search request to obtain an intonation interest identifier of the user. The target speech package is retrieved based on the timbre interest identifier and the intonation interest identifier.

In a possible implementation of embodiments of the present disclosure, the recognizing module 520 may also be configured to: recognize the search request to obtain a style interest identifier of the user. The target speech package is retrieved based on the timbre interest identifier and the style interest identifier.

In a possible implementation of embodiments of the present disclosure, the recognizing module 520 may also be configured to: recognize the search request to obtain a character interest identifier of the user. The target speech package is retrieved based on the timbre interest identifier and the character interest identifier.

In a possible implementation of embodiments of the present disclosure, the recognizing module 520 may also be configured to: segment the search request to generate multiple segmentation words; obtain attribute information of the multiple segmentation words; obtain a qualifier corresponding to a preset noun based on the attribute information of the multiple segmentation words; and obtain the timbre interest identifier, the intonation interest identifier, the style interest identifier or the character interest identifier of the user based on the qualifier.

It should be noted that, description for the embodiments of the method for recommending the speech packet is also applicable to the apparatus for recommending the speech packet in this embodiment, which is not be elaborated herein.

With the apparatus for recommending the speech packet according to embodiments of the present disclosure, the search request of the user is obtained. The search request is recognized to obtain the timbre interest identifier of the user. The target speech packet is retrieved based on the timbre interest identifier. The target speech packet is recommended to the user. In this way, the timbre interest identifier of the user is obtained by recognizing the search request of the user, and a speech packet having an interested timbre to the user is recommended to the user based on the timbre interest identifier of the user. The user does not need to try listening to the speech packets one by one for selecting, the operation is simple, the recommendation is accurate, and intelligence is improved.

According to embodiments of the present disclosure, the present disclosure also provides an electronic device and a readable storage medium.

As illustrated in FIG. 6, FIG. 6 is a block diagram illustrating an electronic device capable of implementing a method for recommending a speech packet according to embodiments of the present disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the present disclosure described and/or claimed herein.

As illustrated in FIG. 6, the electronic device includes: one or more processors 601, a memory 602, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 6, a processor 601 is taken as an example.

The memory 602 is a non-transitory computer readable storage medium provided by the present disclosure. The memory is configured to store instructions executable by at least one processor, to enable the at least one processor to execute the method for recommending the speech packet provided by the present disclosure. The non-transitory computer readable storage medium provided by the present disclosure is configured to store computer instructions. The computer instructions are configured to enable a computer to execute the method for recommending the speech packet provided by the present disclosure.

As the non-transitory computer readable storage medium, the memory 602 may be configured to store non-transitory software programs, non-transitory computer executable programs and modules, such as program instructions/module (such as, the obtaining module 510, the recognizing module 520, and the recommending module 530 illustrated in FIG. 5) corresponding to the method for recommending the speech packet according to embodiments of the present disclosure. The processor 601 is configured to execute various functional applications and data processing of the server by operating non-transitory software programs, instructions and modules stored in the memory 602, that is, implements the method for recommending the speech packet according to the above method embodiments.

The memory 602 may include a storage program region and a storage data region. The storage program region may store an application required by an operating system and at least one function. The storage data region may store data created according to predicted usage of the electronic device based on the semantic representation. In addition, the memory 602 may include a high-speed random access memory, and may also include a non-transitory memory, such as at least one disk memory device, a flash memory device, or other non-transitory solid-state memory device. In some embodiments, the memory 602 may optionally include memories remotely located to the processor 601, and these remote memories may be connected to the electronic device via a network. Examples of the above network include, but are not limited to, an Internet, an intranet, a local area network, a mobile communication network and combinations thereof.

The electronic device capable of implementing the method for recommending the speech packet may also include: an input device 603 and an output device 604. The processor 601, the memory 602, the input device 603, and the output device 604 may be connected via a bus or in other means. In FIG. 6, the bus is taken as an example.

The input device 603 may receive inputted digital or character information, and generate key signal input related to user setting and function control of the electronic device capable of implementing the method for recommending the speech packet, such as a touch screen, a keypad, a mouse, a track pad, a touch pad, an indicator stick, one or more mouse buttons, a trackball, a joystick and other input device. The output device 604 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other.

With the technical solution of embodiments of the present disclosure, the timbre interest identifier of the user is obtained by recognizing the search request of the user, and a speech packet having an interested timbre to the user is recommended to the user based on the timbre interest identifier of the user, thereby implementing personalized recommendation of the speech packet. The user does not need to try listening to the speech packets one by one for selecting, the operation is simple, the recommendation is accurate, and intelligence is improved.

In the description of the present disclosure, terms such as "first" and "second" are used for purposes of description and are not understood to indicate or imply relative importance or implicitly indicate the number of indicated technical features. Therefore, the features defined with "first" and "second" may explicitly or implicitly include at least one of the indicated technical features. In the description of the present disclosure, the term "multiple" means at least two, such as two, three, etc., unless otherwise specifically defined.

Although embodiments of the present disclosure have been illustrated and described above, it should be understood that the above embodiments are exemplary, and should not be construed as limiting the present disclosure. The skilled in the art can make changes, modifications, substitutions and variations to the above embodiments within the scope of the present disclosure.

## Claims

1. A method for recommending a speech packet, comprising:
obtaining a search request of a user;
recognizing the search request to obtain a timbre interest identifier of the user; and
retrieving a target speech packet based on the timbre interest identifier, and recommending the target speech packet to the user.

2. The method of claim 1, further comprising:
recognizing the search request to obtain an intonation interest identifier of the user, wherein the target speech package is retrieved based on the timbre interest identifier and the intonation interest identifier.

3. The method of claim 1, further comprising:
recognizing the search request to obtain a style interest identifier of the user, wherein the target speech package is retrieved based on the timbre interest identifier and the style interest identifier.

4. The method of claim 1, further comprising:
recognizing the search request to obtain a character interest identifier of the user, wherein the target speech package is retrieved based on the timbre interest identifier and the character interest identifier.

5. The method of any of claims 1-4, wherein recognizing the search request to obtain the timbre interest identifier, the intonation interest identifier, the style interest identifier or the character interest identifier of the user comprises:
segmenting the search request to generate a plurality of segmentation words;
obtaining attribute information of the plurality of segmentation words;
obtaining a qualifier corresponding to a preset noun based on the attribute information of the plurality of segmentation words; and
obtaining the timbre interest identifier, the intonation interest identifier, the style interest identifier or the character interest identifier of the user based on the qualifier.

6. An apparatus for recommending a speech packet, comprising:
an obtaining module, configured to obtain a search request of a user;
a recognizing module, configured to recognize the search request to obtain a timbre interest identifier of the user; and
a recommending module, configured to retrieve a target speech packet based on the timbre interest identifier, and to recommend the target speech packet to the user.

7. The apparatus of claim 6, wherein the recognizing module is further configured to:
recognize the search request to obtain an intonation interest identifier of the user, wherein the target speech package is retrieved based on the timbre interest identifier and the intonation interest identifier.

8. The apparatus of claim 6, wherein the recognizing module is further configured to:
recognize the search request to obtain a style interest identifier of the user, wherein the target speech package is retrieved based on the timbre interest identifier and the style interest identifier.

9. The apparatus of claim 6, wherein the recognizing module is further configured to:
recognize the search request to obtain a character interest identifier of the user, wherein the target speech package is retrieved based on the timbre interest identifier and the character interest identifier.

10. The apparatus of any of claims 6-9, wherein the recognizing module is further configured to:
segment the search request to generate a plurality of segmentation words;
obtain attribute information of the plurality of segmentation words;
obtain a qualifier corresponding to a preset noun based on the attribute information of the plurality of segmentation words; and
obtain the timbre interest identifier, the intonation interest identifier, the style interest identifier or the character interest identifier of the user based on the qualifier.

11. An electronic device, comprising:
at least one processor; and
a memory, communicatively coupled to the at least one processor,
wherein the memory is configured to store instructions executable by the at least one processor, and when the instructions are executed by the at least one processor, the at least one processor is caused to execute the method for recommending the speech packet according to any one of claims 1 to 5.

12. A non-transitory computer readable storage medium having computer instructions stored thereon, wherein the computer instructions are configured to cause a computer to execute the method for recommending the speech packet according to any one of claims 1 to 5.
